# FASCICULE DE BREVET EUROPEEN

(11) **EP 0 516 500 B1**
(45) Date de publication et mention de la délivrance du brevet: **10.04.1996**
(21) Numéro de dépôt: 92401302.2
(22) Date de dépôt: 13.05.1992
(51) Int. Cl.: F16J 9/00, F16J 9/20

(54) **Segment de compression pour machines à pistons alternatifs**
Verdichtungsring für eine Kolbenmaschine
Compression ring for a piston machine

(30) Priorité: 27.05.1991 FR 9106343
(43) Date de publication de la demande: 02.12.1992
(73) Titulaire: SEALED POWER EUROPE SA, F-74370 Pringy (FR)
(72) Inventeur: Gillo, Francis, F-74330 La Balme de Sillingy (FR)
(74) Mandataire: Casalonga, Axel

(56) Documents cités:
- DE-A- 1 475 758
- FR-A- 1 493 704
- FR-A- 2 369 468

## Description

La présente invention se rapporte à un segment de compression pour des machines à pistons alternatifs, constitué d'un tronçon de profilé en acier en forme d'anneau fendu.

Sur les machines à pistons alternatifs et en particulier sur les moteurs à combustion interne (moteurs à allumage commandé et moteurs à allumage par compression), les segments de compression (segments dits de coup de feu, segments d'étanchéité) sont constitués jusqu'à présent habituellement par des segments en fonte. Ces segments en fonte sont produits soit directement par fonderie unitaire, à savoir généralement par coulée en grappe, soit par tronçonnage dans des tubes de fonte centrifuge. Dans tous les cas, il est donc nécessaire de passer par une phase de fonderie suivie d'un usinage.

Les segments en fonte rigides de hauteur relativement importante compte tenu de la fragilité de la fonte, donc massifs et lourds, sont dimensionnés de manière à présenter, à l'état libre, c'est-à-dire avant leur montage dans le cylindre, entre leurs becs une ouverture telle que lorsque le segment est monté dans le cylindre, il subsiste entre les becs un jeu, dit jeu à la coupe, d'une valeur telle que les deux becs du segment ne puissent jamais se toucher, quelles que soient les conditions de fonctionnement du moteur. Ce jeu à la coupe provoque une fuite des gaz de combustion du moteur (dit "blow-by"). Pour réduire ces fuites de gaz, il est usuel de décaler circonférentiellement les coupes des segments de compression montées sur un même piston. Néanoins, ces fuites restent non négligeables, ce qui diminue le rendement du moteur.

Un autre inconvénient des segments de compression en fonte réside dans la pression non uniforme que les segments exercent sur le cylindre. En effet, pour permettre une meilleurs étanchéité à la coupe, les segments en fonte rigides sont usinés en forme "poire", d'où une usure très importante des becs et une usure non uniforme correspondante du cylindre.

Pour réduire d'une manière générale l'usure des segments, il a déjà été proposé de réaliser les segments de compression en acier, ce qui permet de fabriquer un tel segment de compression par cintrage en forme d'anneau d'un tronçon de profilé en acier. Cependant, ces segments de compression en acier conservent la plupart des autres inconvénients des segments de compression en fonte, dus notamment au poids, à la hauteur et à la rigidité de ces segments et à la présence du jeu à la coupe.

D'un autre côté, on connaît depuis longtemps (FR-A-2 369 468) des segments racleurs d'huile constitués par un tronçon de ruban de tôle d'acier plié sous la forme d'un U à ailes espacées et cintré en anneau, de manière que l'âme du U soit tournée vers l'intérieur et les deux ailes du U vers l'extérieur du segment. Pour augmenter l'élasticité d'un tel segment racleur, on munit le tronçon de ruban de tôle en U d'une rangée d'ajours ménagés dans l'âme du U et de fentes radiales ménagées en alternance dans les ailes du U, chacune au droit d'un desdits ajours, de telle manière que les fentes dans une aile soient en quinconce avec les fentes dans l'autre aile.

Ces segments racleurs d'huile, du fait de leur élasticité, exercent une pression uniforme sur le cylindre, mais la structure de ces segments racleurs ne paraissait pas transposables aux segments de compression dont les fonctions et sollicitations sont différents.

La présente invention a pour objet un segment de compression présentant des performances améliorées par rapport aux segments de compression connus en fonte ou en acier en ce qui concerne l'effet d'étanchéité, c'est-à-dire le contrôle des fuites de gaz de combustion, la hauteur et le poids des segments, l'usure et la pression des segments ainsi que la fragilité et la simplicité de montage des segments dans le moteur.

Le segment de piston tel que revendiqué pour machines à pistons alternatifs est formé d'un tronçon de profilé en acier en forme d'anneau fendu. Le tronçon de profilé est constitué par un tronçon de ruban de tôle d'acier plié sous la forme d'un U, de manière que l'âme du U soit tournée vers l'intérieur et les deux ailes vers l'extérieur du segment. Des fentes radiales sont menagées en alternance dans les ailes du U, de telle manière que les fentes dans une aile soient en quinconce avec les fentes dans l'autre aile. Selon l'invention, le segment de piston est un segment de compression. Les ailes du U sont jointives. La longueur circonférentielle du segment est telle que les deux extrémités du segment se touchent à l'endroit de la coupe dans toutes les conditions de fonctionnement du moteur.

Pour améliorer encore l'élasticité du segment conforme à l'invention, il est possible de prévoir dans le ruban de tôle en U, dans l'âme de ce dernier, une rangée circonférentielle d'ajours dans lesquels débouchent lesdites fentes.

Le segment de compression conforme à l'invention reprend donc une partie des caractéristiques connues pour les segments racleurs, à savoir notamment celles concernant l'élasticité (constitution du segment par un tronçon de ruban de tôle d'acier plié en U, avec des fentes radiales en quinconce dans les ailes du U et éventuellement une rangée d'ajours dans l'âme du U), en prévoyant cependant une caractéristique (ailes jointives du U) qui, d'une manière étonnamment simple, permet d'adapter à des segments de compression cette structure générale connue pour des segments racleurs d'huile, tout en conservant les avantages offerts par cette structure générale. En effet, le fait que les deux ailes comportant des fentes en quinconce soient jointives supprime ou pour le moins réduit considérablement les fuites de gaz qui pourraient sinon se produire par lesdites fentes et permet simultanément de donner au ruban de tôle en U une inertie thermique comparable à celle d'un profilé massif, d'où une évacuation de chaleur équivalente ce qui est essentiel pour un segment de compression et surtout pour un segment coup de feu. En outre, du fait de sa constitution en acier, le segment peut être réalisé avec une très faible hauteur, donc avec un poids très réduit. De plus, du fait de la multitude de fentes réparties sur la circonférence du segment, ce dernier présente une élasticité circonférentielle telle que le segment puisse être monté dans le cylindre sans jeu à la coupe, ce qui permet un contrôle optimal des fuites de gaz, sans aucun risque de grippage du segment dans le cylindre.

En se référant aux dessins schématiques annexés, on va décrire ci-après plus en détail un mode de réalisation illustratif et non limitatif d'un segment de compression conforme à l'invention; sur les dessins :
la figure 1 est une vue en plan d'une partie d'un segment de compression conforme à l'invention;
la figure 2 est une vue suivant II-II de la figure 1;
les figures 3 et 4 sont des coupes, à plus grande échelle, suivant III-III et IV-IV de la figure 1;
la figure 5 représente une partie d'un ruban de tôle ajouré et fendu, avant son pliage en U pour la constitution d'un segment conforme à l'invention.

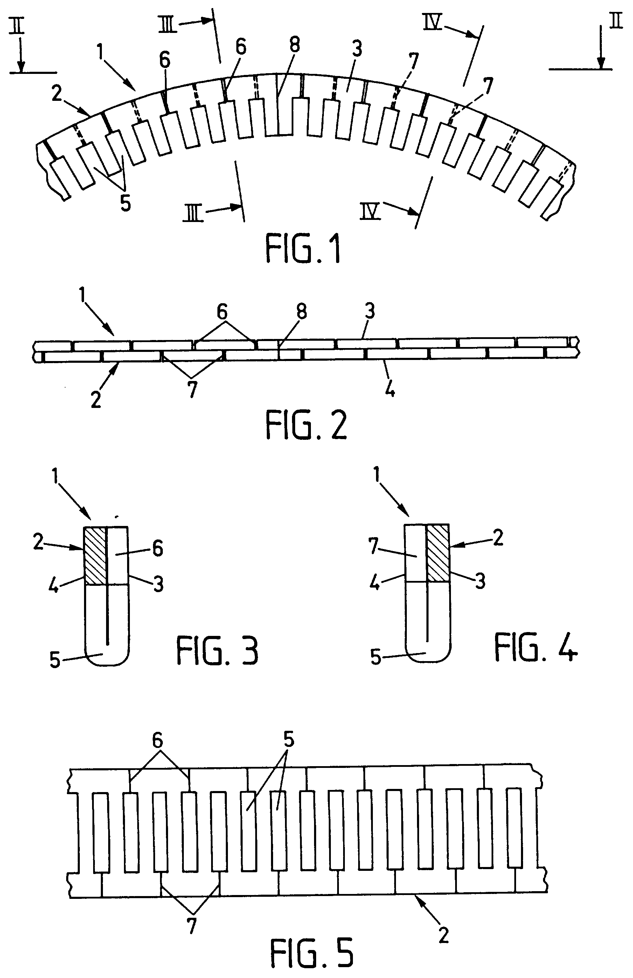

Tel qu'illustré par les figures 1 à 4, un segment de compression 1 conforme à l'invention est constitué par un ruban de tôle 2 plié sous la forme d'un U symétrique dont les deux ailes 3 et 4 sont jointives. Le ruban de tôle 2 comporte, dans la zone de l'âme du U, une rangée d'ajours 5 régulièrement espacés sur la longueur du ruban. Dans l'exemple représenté, les ajours 5 s'étendent également sur une partie de la longueur des ailes 3 et 4, à savoir à peu près sur la moitié de cette longueur. De plus, le ruban de tôle 2 comporte des fentes 6 et 7 ménagées transversalement à la longueur du ruban de tôle 2 en alternance dans les ailes 3 et 4 du U, chacune au droit d'un des ajours 5, de manière que les fentes 6 dans l'aile 3 soient en quinconce avec les fentes 7 dans l'aile 4.

Le ruban de tôle 2 plié en U, muni des ajours 5 et des fentes 6 et 7, est cintré sous la forme d'un anneau (segment) de telle manière que l'âme (avec les ajours 5) soit tournée vers l'intérieur du segment 1 et les ailes 3 et 4 (avec les fentes 6 et 7 orientées radialement) vers l'extérieur du segment 1.

Il y a par ailleurs lieu de noter que les deux flancs de chacune des fentes 6 et 7 sont légèrement espacés l'un de l'autre et que le ruban de tôle 2 présente une longueur telle que lorsque le segment 1, cintré en anneau, est monté sur le piston lui-même introduit dans son cylindre, les deux extrémités du segment soient plaquées l'une contre l'autre avec une tare tangentielle assurant à la fois l'absence de jeu à la coupe 8 et une pression unitaire suffisante contre le cylindre. Cela est possible grâce à la largeur prédéterminée des fentes 6 et 7, qui procure au segment son élasticité tangentielle.

L'élasticité radiale du segment conforme à l'invention est due à la fois à la présence des fentes 6 et 7 et à la présence des ajours 5 dont les dimensions peuvent être choisies plus ou moins importantes en fonction des besoins et qui allègent le segment.

Selon la figure 5, les segments de compression conformes à l'invention peuvent être fabriqués par découpage d'une rangée médiane d'ajours 5 rectangulaires, transversaux, dans un ruban de tôle d'acier au carbone 2, avec réalisation simultanée par cisaillement, au droit des ajours 5, de fentes 6 et 7 s'étendant transversalement au ruban 2 depuis les ajours 5 en alternance vers un bord transversal ou vers l'autre du ruban 2. Cette opération de découpage et de cisaillement est suivie du pliage en U du ruban, de la coupe à longueur pour former des tronçons, d'une compression du ruban plié pour rendre jointives les deux ailes du U, éventuellement en donnant au U une forme légèrement trapézoïdale, du cintrage de chaque tronçon de ruban en anneau, d'une expansion de l'anneau pour augmenter la largeur des fentes 6 et 7 et donner au segment la tare tangentielle recherchée, d'un éventuel traitement thermique des segments pour donner à ces derniers une dureté de 50 à 60 HRC après revenu, d'une rectification extérieure au diamètre nominal, d'un rodage si nécessaire et d'une phosphatation éventuelle. De plus, dans le cas des segments coup de feu, il est possible de prévoir un revêtement par projection sur la face supérieure et la face frottante, par exemple un revêtement isolant de molybdène, céramique etc.

Les avantages des segments de compression conformes à l'invention par rapport aux segments de compression massifs connus sont multiples.

### 1. Amélioration de l'étanchéité au gaz.

Le segment conforme à l'invention ne comporte pas de jeu à la coupe après montage dans le moteur, mais présente une multitude de petites fentes réparties sur toute la circonférence. Les fentes successives étant disposées en quinconce dans une aile et dans l'autre du segment et les deux ailes étant jointives, les fuites de gaz se trouvent réduites et peuvent être contrôlées par la largeur de chaque fente unitaire. Un tel contrôle n'est pas possible sur un segment massif et rigide sur lequel l'indispensable jeu à la coupe dépend de la dilatation du segment en fonctionnement, dilatation qui est très variable pendant le cycle du moteur.

### 2. Diminution du poids du segment.

Du fait des ajours qui allègent le segment et du fait de la hauteur totale très faible du segment conforme à l'invention (hauteur réduite jusqu'à 0,8 mm si nécessaire), ce segment est très léger (entre la moitié et le tiers du poids d'un segment en fonte).

La réduction de la hauteur du segment permet de réduire la hauteur des gorges de piston, donc de diminuer la hauteur totale du piston. Il en résulte un allègement du piston qui, tout comme la réduction de la masse du segment, permet de diminuer la masse et donc l'inertie des pièces en mouvement, d'où une augmentation du rendement du moteur.

### 3. Usure réduite.

L'usure du segment conforme à l'invention est réduite comparée à l'usure d'un segment en fonte, pour deux raisons principales :
a) l'acier au carbone utilisé pour la fabrication du segment conforme à l'invention a une meilleure résistance à l'usure que la fonte;
b) du fait de sa grande élasticité, le segment conforme à l'invention présente une pression unitaire régulièrement répartie sur la circonférence, d'où une usure mieux répartie sur le cylindre, tandis que le segment en fonte rigide possède une pression unitaire mal répartie, d'où une usure importante des becs du segment.

### 4. Profil plus efficace du segment.

Le segment conforme à l'invention étant en acier, il est possible sans risque de lui donner des anales plus vifs que ceux que l'on peut réaliser sur des segments en fonte. Or, ces angles vifs sont favorables au contrôle des fuites de gaz entre la chambre de combustion et le carter.

### 5. Souplesse et conformabilité.

La souplesse et la conformabilité du segment conforme à l'invention permettent à ce dernier de suivre les déformations des chemises qui se produisent lors du fonctionnement du moteur, ce qui améliore le rendement de celui-ci.

### 6. Fragilité réduite

Du fait de sa souplesse, le segment conforme à l'invention peut être manipulé très facilement sans subir des déformations permanentes, ce qui n'est pas le cas pour un segment en fonte qui est très fragile et peut se casser lors des manipulations ou des chocs thermiques.

### 7. Montage simplifié dans le moteur.

Le montage des segments en fonte sur le piston et ensuite le montage de l'ensemble dans une chemise constitue une opération très délicate qui nécessite beaucoup de précaution et qui est une source importante d'ennuis par rupture, écaillage etc.

Au contraire, du fait de sa souplesse et de sa fragilité réduite, le segment conforme à l'invention se monte très facilement sur le piston et surtout dans le cylindre, cela sans précaution particulière.

Il va de soi que le mode de réalisation décrit ci-dessus et illustré par les dessins annexés n'a été donné qu'à titre d'exemple non limitatif.

Ainsi, la forme des ajours 5 ainsi que la taille de ces derniers peuvent être modifiées selon les besoins. Il est même possible d'envisager, le cas échéant, de renoncer à la présence des ajours 5, c'est-à-dire de prévoir uniquement des fentes 6 et 7 en quinconce dans les deux ailes 3 et 4 du segment. Le nombre des fentes 6 et 7 et la largeur et longueur de ces fentes sont principalement fonctions de l'élasticité recherchée du segment et du diamètre de ce dernier, ainsi que du taux de fuites de gaz maximal recherché.

## Revendications

1. Segment de piston pour machines à pistons alternatifs, constitué d'un tronçon de profilé en acier en forme d'anneau fendu, le tronçon de profilé étant constitué par un tronçon de ruban de tôle d'acier (2) plié sous la forme d'un U de manière que l'âme du U soit tournée vers l'intérieur et les deux ailes vers l'extérieur du segment, avec des fentes radiales (6, 7) ménagées en alternance dans les ailes (3,4) du U de manière que les fentes dans une aile se trouvent en quinconce avec les fentes dans l'autre aile, caractérisé pour le fait que le segment est un segment de compression, que les ailes du U sont des ailes jointives (3,4), et que la longueur circonférentielle du segment est telle que les deux extrémités du segment se touchent à l'endroit de la coupe (8) dans toutes les conditions de fonctionnement du moteur.

2. Segment de piston suivant la revendication 1, caractérisé par le fait qu'il comprend, en outre, une rangée d'ajours (5) ménagés dans l'âme du U et que lesdites fentes radiales (6, 7) sont ménagées dans les ailes (3, 4) au droit desdits ajours (5).

3. Segment de piston suivant la revendication 1 ou 2, caractérisé par le fait que lesdites fentes (6, 7) sont élargies par expansion du segment.

## Patentansprüche

1. Kolbenring für Kolbenmaschinen, bestehend aus einem Profilabschnitt aus Stahl in Form eines Schlitzringes, wobei der Profilabschnitt aus einem Stahlblechbandabschnitt (2) besteht, der U-förmig derart gebogen ist, daß der Steg des U zum Inneren und die beiden Schenkel zum Äußeren des Ringes gerichtet sind, und wobei radiale Schlitze (6, 7) abwechselnd in den Schenkeln (3, 4) des U derart ausgebildet sind, daß die Schlitze in einem Schenkel zu den Schlitzen im anderen Schenkel versetzt sind,
**dadurch gekennzeichnet, daß**
der Ring ein Verdichtungsring ist, daß die Schenkel des U aneinanderstoßend Schenkel (3, 4) sind, und daß die Umfangslänge des Ringes derart ist, daß die beiden Enden des Ringes sich an der Schnittstelle (8) in allen Betriebszuständen des Motors berühren.

2. Kolbenring nach Anspruch 1,
**dadurch gekennzeichnet, daß**
er außerdem eine Reihe von Durchbrüchen (5) aufweist, die im Steg des U ausgebildet sind, und daß die radialen Schlitze (6, 7) in den Schenkeln (3, 4) ausgerichtet auf die Durchbrüche (5) ausgebildet sind.

3. Kolbenring nach Anspruch 1 oder 2,
**dadurch gekennzeichnet, daß**
die Schlitze (6, 7) durch Expansion des Ringes verbreitert sind.

## Claims

1. Piston ring for engines with reciprocating pistons, constituted by a length of a steel strip bent into a split ring, the steel strip being a steel sheet strip (2) folded into the shape of a U so that the web of the U is turned towards the inside and the two legs towards the outside of the ring , with radial splits (6,7) provided alternately in the legs (3,4) of the U so that the splits in one leg are staggered with respect to the splits in the other leg, characterized in that the ring is a compression ring, that the legs of the U are contiguous legs (3,4), and that the circumferential length of the ring is such that the two ends of the ring touch one another at the place of the cut (8) in all running conditions of the engine.

2. Piston ring according to Claim 1, characterized in that it further comprises a row of apertures (5) provided in the web of the U and said radial splits (6,7) are provided in the legs (3,4) in line with the said apertures (5).

3. Piston ring according to Claims 1 or 2 wherein said splits (6,7) are widened by expansion of the ring.
